# EUROPEAN PATENT APPLICATION

(11) **EP 2 993 319 A1**
(43) Date of publication of application: **09.03.2016**
(21) Application number: 15183361.3
(22) Date of filing: 01.09.2015
(51) Int. Cl.: F01M 1/08

(54) **INTERNAL COMBUSTION ENGINE**

(30) Priority: 03.09.2014 JP 2014179491
(71) Applicant: Toyota Jidosha Kabushiki Kaisha, Toyota-shi, Aichi 471-8571 (JP)
(72) Inventor: YOSHIDA, Isao, Aichi-ken, Aichi 471-8571 (JP)
(74) Representative: D Young & Co LLP

(57) **Abstract**

An internal combustion engine is equipped with a connecting rod (13) and an oil jet (25). The connecting rod has a small end portion (15) that is coupled to a piston (12), and the small end portion and a large end portion that is coupled to a crankshaft are connected to each other by a shaft portion (17). The oil jet injects oil toward a reverse face of the piston (12). With this internal combustion engine, a communication hole (20) that opens toward the reverse face of the piston and that communicates with a pin hole (19) is provided through the small end portion of the connecting rod. A lower portion (28) of an inner peripheral face (30) that forms the pin hole of the small end portion protrudes more in a direction of extension of a central axis of the pin hole than an upper portion (29).

## Description

### BACKGROUND OF THE INVENTION

### 1. Field of the Invention

The invention relates to an internal combustion engine.

### 2. Description of Related Art

A connecting rod of an internal combustion engine is provided with a pin hole through which a piston pin is inserted. The connecting rod has a small end portion that is coupled to a piston via the piston pin, and a large end portion that is coupled to a crankshaft.

Japanese Utility Model Application Publication No. 4-125618 (JP 4-125618 U) discloses a configuration in which a small end portion of a connecting rod is provided with a communication hole that penetrates an inner peripheral face forming a pin hole from an outer peripheral face of the small end portion and that opens above the small end portion. According to this configuration, when the oil that is injected from an oil jet toward a reverse face of a piston falls in drops from the reverse face of the piston to the outer peripheral face of the small end portion, this oil falling in drops flows into the pin hole through the communication hole, so sliding faces of the pin hole and a piston pin are lubricated.

By the way, with the internal combustion engine described in Japanese Utility Model Application Publication No. 4-125618 (JP 4-125618 U), the oil that falls in drops from the reverse face of the piston to adhere to the outer peripheral face of the small end portion and that falls in drops directly into the communication hole or adheres to a peripheral region of the communication hole to flow into the communication hole along the outer peripheral face is mainly supplied to the sliding faces of the piston pin and the pin hole in the connecting rod. Therefore, the amount of the oil supplied to the sliding faces of the piston pin and the pin hole may become insufficient.

### SUMMARY OF THE INVENTION

The invention provides an internal combustion engine capable of promoting the supply of oil to sliding faces of a piston pin and a pin hole in a connecting rod.

An internal combustion engine in one aspect of the invention includes a cylinder block, a piston, a piston pin, a crankshaft, and a connecting rod. The piston is accommodated in a reciprocable manner in a cylinder that is provided in the cylinder block. The connecting rod includes a small end portion, a large end portion, and a shaft portion. A pin hole is provided through the small end portion. The small end portion rotatably supports the piston pin with an inner peripheral face of the piston pin and an outer peripheral face of the piston pin serving as sliding faces. The inner peripheral face defines the pin hole. The small end portion is coupled to the piston via the piston pin. The large end portion is coupled to the crankshaft. The shaft portion is connected to the small end portion and the large end portion. The small end portion includes an upper portion and a lower portion. The lower portion includes the inner peripheral face of the pin hole. The lower portion is a region that is located below the upper portion in a vertical direction when a direction of extension of the shaft portion and a direction of motion of the piston are parallel to each other, and the lower portion protrudes more outward toward a direction of a central axis of the pin hole than the upper portion. That is, a width of the lower portion is wider than a width of the upper portion in an axial direction of the piston pin. The internal combustion engine may include an oil jet that injects oil toward a reverse face of the piston, and the reverse face is a face that is located on an opposite side of a surface of the piston that defines a combustion chamber. The small end portion may include a communication hole that communicates with the pin hole while facing the reverse face of the piston.

According to the aforementioned configuration, the oil that falls in drops from the reverse face of the piston to flow downward along the piston pin is received by the lower portion of the small end portion that is longer in the direction of extension of the central axis of the pin hole than the upper portion of the small end portion, and is supplied to the sliding faces of the piston pin and the pin hole. In consequence, according to the aforementioned configuration, in addition to the oil that falls in drops from the reverse face of the piston pin to adhere to the outer peripheral face of the small end portion and flow into the communication hole, the oil that falls in drops from the reverse face of the piston pin to adhere to the piston pin and flow downward in the vertical direction along the piston pin can be supplied to the sliding faces of the piston pin and the pin hole. As a result, the supply of oil to the sliding faces of the piston pin and the pin hole can be promoted.

In the aforementioned aspect of the invention, the small end portion may include an inclined portion. The inclined portion may be arranged between the upper portion and the lower portion. The inclined portion may be inclined such that a length of the inclined portion in the direction of the central axis of the pin hole increases from the upper portion side toward the lower portion side.

According to the aforementioned configuration, when the oil that flows downward along the piston pin reaches the inclined portion, part of the oil flows toward the lower portion side along the inclined portion. When flowing along the inclined portion, the oil moves in the direction of extension of the central axis of the piston pin as well. Therefore, according to the aforementioned configuration, the oil flowing downward can be moved in the direction of extension of the central axis of the piston pin as well. As a result, the oil is supplied to wide ranges of the sliding faces of the piston pin and the piston hole.

In the aforementioned aspect of the invention, the small end portion of the connecting rod may have an opening edge portion, and a diameter of the pin hole at the opening edge portion may be increased toward an outside of the pin hole along the central axis of the pin hole. In the aforementioned configuration, the pin hole is increased more in diameter as the distance to an outer side in the direction of extension of the central axis of the pin hole decreases at the opening edge portion of the small end portion. Therefore, there is a large gap between the piston pin and the opening edge portion, and the oil that flows downward along the piston pin is accumulated in this gap.

It should be noted herein that when the piston pin is displaced inside the pin hole as the internal combustion engine operates, a negative pressure is generated between the piston pin and the inner peripheral face forming the pin hole. That is, due to displacement of the piston pin inside the pin hole, a negative pressure is generated in a region with an increased clearance between the inner peripheral face of the small end portion and the piston pin. Then, when this negative pressure is generated, the oil that is accumulated in the gap between the opening edge portion and the piston pin is drawn into a space between the piston pin and the pin hole.

According to the aforementioned configuration, a large amount of oil is accumulated in the gap between the opening edge portion and the piston pin. Therefore, a large amount of oil is also supplied to the space between the piston pin and the pin hole when a negative pressure is generated due to displacement of the piston pin. Accordingly, the supply of oil to the sliding faces of the piston pin and the pin hole can be further promoted.

In the aforementioned aspect of the invention, the diameter of the pin hole at the opening edge portion may be increased such that a rate of increase in a distance between the central axis and the inner peripheral face at the lower portion is higher than a rate of increase in a distance between the central axis and the inner peripheral face at the upper portion.

As the piston moves in a reciprocating manner during operation of the engine, a load is applied to the small end portion via the piston pin. Incidentally, when the piston moves in a combustion stroke, an especially large load is applied to the lower portion of the small end portion via the piston pin.

According to the aforementioned configuration, the gap between the piston pin and the opening edge portion at the lower portion of the small end portion is increased. Therefore, the amount of the oil supplied to the lower portion to which a large load is applied through combustion increases, thus promoting lubrication. Incidentally, when the pin hole is increased in diameter in such a manner as to move far away from the central axis of the pin hole along an entire circumference thereof at the opening edge portion of the small end portion, the area of the sliding faces of the piston pin and the pin hole at the upper portion that is shorter in axial length than the lower portion at the small end portion becomes too small. As a result, an increase in surface pressure is caused, and it may become impossible to secure an oil film. In contrast, with the aforementioned pin hole, the upper portion is more gently increased in diameter than the lower portion. Therefore, the area of the sliding faces of the piston pin and the pin hole at the upper portion of this small end portion can be secured, and an oil film can also be secured.

In consequence, according to the aforementioned configuration, both the promotion of the supply of oil to the sliding faces at the lower portion of the small end portion and the securement of an oil film at the upper portion of the small end portion can be achieved.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view showing the configuration of an internal combustion engine as one embodiment of the invention;
FIG. 2 is a front view of a small end portion of a connecting rod according to the embodiment of the invention;
FIG. 3 is a lateral view of the small end portion of the connecting rod according to the embodiment of the invention;
FIG. 4 is a cross-sectional view of the small end portion along a line 4-4 in FIG. 2;
FIG. 5 is a schematic view showing the flow of oil falling in drops from a reverse face of a piston in the embodiment of the invention;
FIG. 6 is a schematic view showing the flow of oil falling in drops from a reverse face of a piston in a conventional internal combustion engine;
FIG. 7 is a cross-sectional view showing, on an enlarged scale, an opening edge portion of the small end portion of the connecting rod according to the embodiment of the invention;
FIG. 8 is a view showing a displacement mode of a piston pin according to the embodiment of the invention;
FIG. 9 is a view showing a displacement mode of the piston pin according to the embodiment of the invention;
FIG. 10 is a cross-sectional view schematically showing a curved state of the piston pin according to the embodiment of the invention;
FIG. 11 is a lateral view of a small end portion of a connecting rod according to an internal combustion engine as an additional embodiment of the invention;
FIG. 12 is a schematic view showing the configuration of an internal combustion engine as another embodiment of the invention; and
FIG. 13 is a cross-sectional view of a small end portion along a line 13-13 in FIG. 12.

### DETAILED DESCRIPTION OF EMBODIMENTS

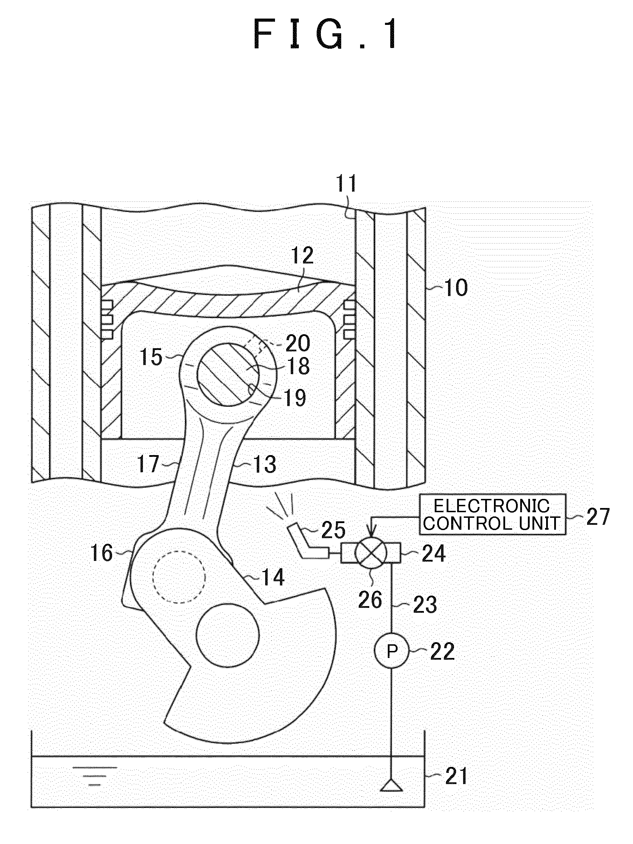

One embodiment of the invention as concretization of an internal combustion engine will be described hereinafter with reference to FIGS. 1 to 10. Incidentally, this embodiment of the invention relates to an in-line internal combustion engine having cylinders that are arranged in series. The internal combustion engine is mounted in a vehicle with the respective cylinders upright in a vertical direction.

As shown in FIG. 1, a cylinder block 10 of the internal combustion engine is provided with a cylinder 11. A piston 12 is accommodated in a reciprocable manner in the cylinder 11. The piston 12 is connected to a crankshaft 14 via a connecting rod 13.

Besides, the internal combustion engine is provided with an oil pan 21 that stores oil, below the cylinder block 10. The oil in the oil pan 21 is pumped up by an oil pump 22, and is force-fed to an oil supply passage 23. An oil jet passage 24 is connected to the oil supply passage 23. An oil jet 25 that injects oil toward a reverse face of the piston 12 is connected to the oil jet passage 24. Incidentally, the oil jet passage 24 is provided, except at both ends thereof, with a control valve 26 that changes over a communication state of the passage 24. That is, when the control valve 26 is open, the oil jet passage 24 is in communication, so the oil supplied to the oil jet passage 24 is injected from the oil jet 25 to the reverse face of the piston 12. On the other hand, when the control valve 26 is closed, the oil jet passage 24 is shut off, so no oil is injected from the oil jet 25. Incidentally, the control valve 26 is controlled to be opened/closed by an electronic control unit 27 that is provided in the internal combustion engine.

The connecting rod 13 of this internal combustion engine is provided with a small end portion 15 that is coupled to the piston 12. One end of a shaft portion 17 is connected to the small end portion 15. A large end portion 16 is connected to the other end of the shaft portion 17. The crankshaft 14 is coupled to the large end portion 16.

The small end portion 15 is provided with a pin hole 19 through which a piston pin 18 is inserted. The small end portion 15 is coupled to the piston 12 via the piston pin 18 inserted through the pin hole 19. Incidentally, the pin hole 19 rotatably supports the piston pin 18 while sliding with respect to the piston pin 18.

Besides, the small end portion 15 is provided with a communication hole 20 that opens to an outer peripheral face of the small end portion 15 and that communicates with the pin hole 19. This communication hole 20 opens toward the reverse face of the piston 12.

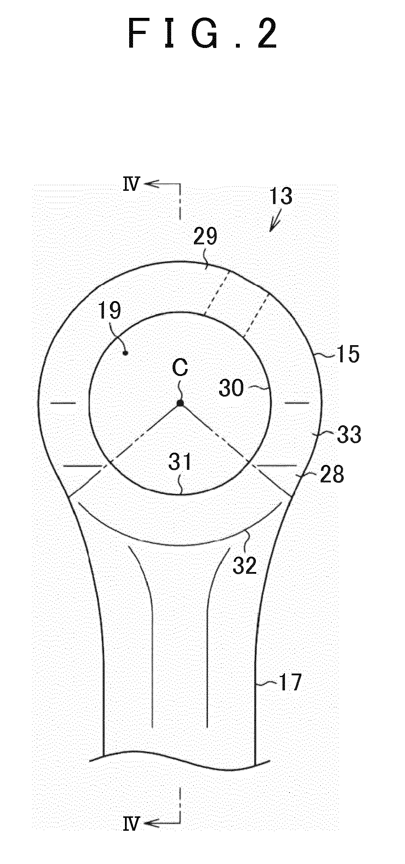

Next, the configuration of the small end portion 15 of the connecting rod 13 will be described in detail with reference to FIGS. 2 to 4. Each of the drawings shows a state where the piston 12 that is coupled to the connecting rod 13 is located at a top dead center and the connecting rod 13 is upright in the vertical direction. Incidentally, since this internal combustion engine is mounted with the cylinder 11 that is upright in the vertical direction, the piston 12 that is accommodated in the cylinder 11 moves in a reciprocating manner in the vertical direction. Accordingly, in the present embodiment of the invention, when the connecting rod 13 is upright, the direction of extension of the shaft portion 17 of the connecting rod 13 and the direction of motion of the piston 12 are parallel to each other.

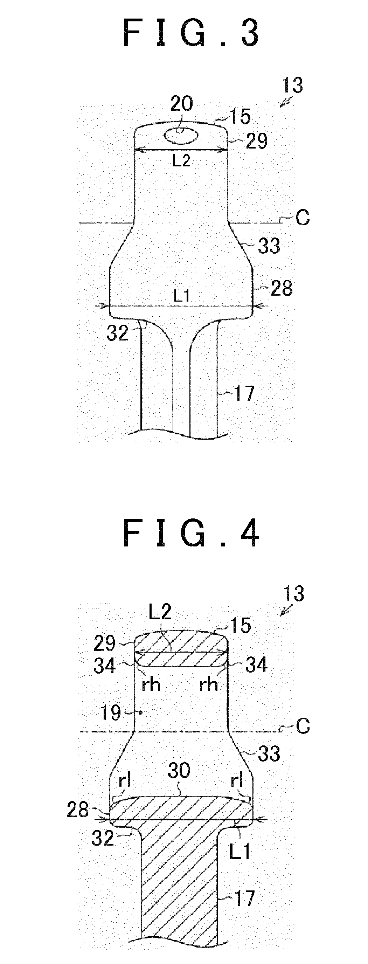

As shown in FIG. 2, when the connecting rod 13 is upright, the shaft portion 17 is located below the small end portion 15 in the vertical direction. Besides, as shown in FIG. 3, if the length of the pin hole 19 in the direction of extension of a central axis C thereof (a lateral direction in FIG. 3) is assumed to be an axial length, an axial length L1 of a lower portion 28 of the small end portion 15 that is located below in the vertical direction is longer than an axial length L2 of an upper portion 29 of the small end portion 15 that is located above in the vertical direction (L1 > L2). That is, the lower portion 28 protrudes more outward in the direction of extension of the central axis C than the upper portion 29.

Incidentally, in the present embodiment of the invention, as shown in FIG. 2, the lower portion 28 of the small end portion 15 is a region including a lowermost portion 31 that belongs to an inner peripheral face 30 forming the pin hole 19 and that is located lowest in the vertical direction, and a region that is located between the central axis C and a connection portion 32 to which the shaft portion 17 is connected, when the connecting rod 13 is upright. Besides, the upper portion 29 of the small end portion 15 is a region that is located on the opposite side of the lower portion 28 across the central axis C, namely, a region that is located above in the vertical direction. Besides, as for the inner peripheral face 30 that forms the pin hole 19 of the small end portion 15, a lower portion of the inner peripheral face 30 is a region that is formed by the lower portion 28, and an upper portion of the inner peripheral face 30 is a region that is formed by the upper portion 29. That is, the axial length of the lower portion of the inner peripheral face 30 is longer than the axial length of the upper portion of the inner peripheral face 30.

Incidentally, as shown in FIG. 3, the small end portion 15 is provided with an inclined portion 33 that is inclined such that the axial length thereof increases from the upper portion 29 side toward the lower portion 28 side. A lower end of this inclined portion 33 is connected to the lower portion 28. The axial length of this lower end is equal to the axial length L1 of the lower portion 28.

Besides, as shown in FIG. 4, opening edge portions 34 that are provided in both end faces of the small end portion 15 in the direction of extension of the central axis C are so curved as to move away from the central axis C as the distance to an outer side in the direction of extension of the central axis C decreases. Therefore, the pin hole 19 is so shaped as to increase more in diameter as the distance to the outer side in the direction of extension of the central axis C decreases at the opening edge portions 34. Besides, a curvature radius rl of the opening edge portions 34 at the lower portion 28 in the direction of extension of the central axis C is larger than a curvature radius rh of the opening edge portions 34 at the upper portion 29 in the direction of extension of the central axis C (rl > rh). That is, the pin hole 19 is increased in diameter such that the lower portion 28 moves further away from the central axis C than the upper portion 29 as the distance to the outer side of the central axis C decreases at the opening edge portions 34.

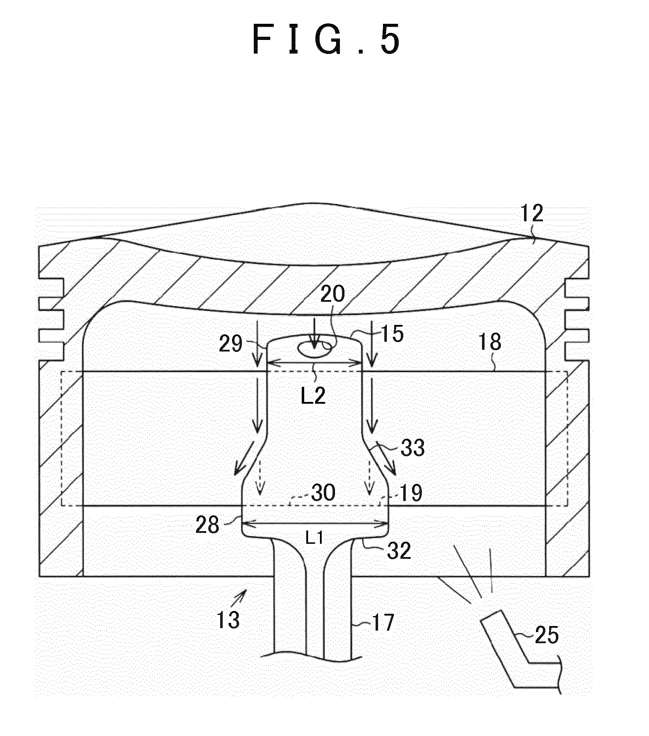

Next, the operation of the internal combustion engine according to the present embodiment of the invention will be described with reference to FIGS. 5 to 10. The oil injected from the oil jet 25 adheres to the reverse face of the piston 12. Then, the oil falls in drops from the reverse face of the piston 12 after the piston 12 is cooled.

As indicated by arrows in FIG. 5, the oil that thus falls in drops from the reverse face of the piston 12 to adhere to the piston pin 18 flows downward in the vertical direction along the piston pin 18. With the connecting rod 13 that is provided in the internal combustion engine of the present embodiment of the invention, the axial length L1 of the lower portion 28 of the small end portion 15 is longer than the axial length L2 of the upper portion 29 of the small end portion 15. Therefore, as indicated by broken arrows in FIG. 5, the oil that flows downward along the piston pin 18 is received by the lower portion 28 of the small end portion 15, and is supplied to sliding faces of the piston pin 18 and the pin hole 19.

Besides, the oil that falls in drops from the reverse face of the piston 12 and that falls in drops directly into the communication hole 20 or adheres to the outer peripheral face of the small end portion 15 to flow into the communication hole 20 along the outer peripheral face is supplied to the sliding faces of the piston pin 18 and the pin hole 19 through the communication hole 20.

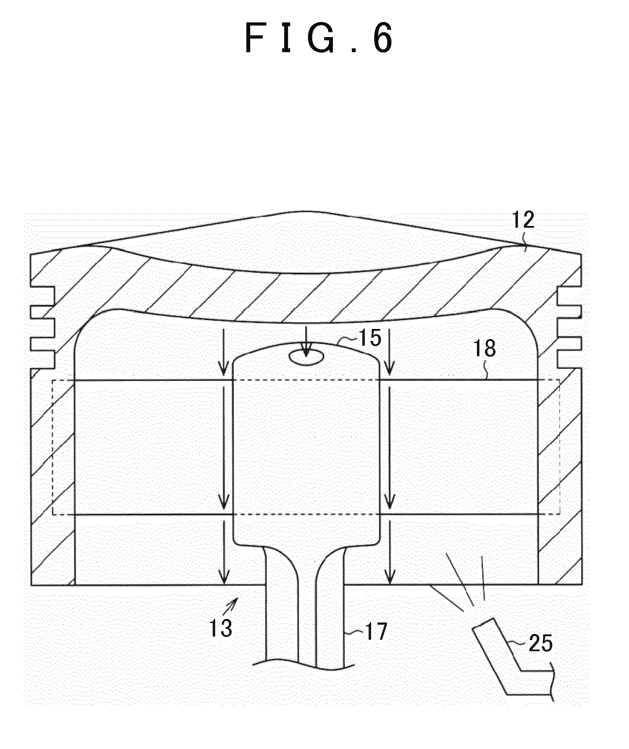

On the other hand, as shown in FIG. 6, with the conventional connecting rod 13 having the small end portion 15 whose axial length is constant along an entire circumference thereof, the oil that flows downward along the piston pin 18 continues to flow downward without being received by the lower portion of the small end portion 15.

It should be noted herein that a load is applied to the small end portion 15 via the piston pin 18 as the piston 12 moves in a reciprocating manner during operation of the engine. Incidentally, when the piston 12 moves in a combustion stroke, an especially large load is applied to the lower portion 28 of the small end portion 15 via the piston pin 18. In the present embodiment of the invention, as shown in FIG. 5, while the axial length L1 of the lower portion 28 of the small end portion 15 to which a large load is applied in a combustion stroke is set as long as the axial length of the conventional connecting rod 13, the axial length L2 of the upper portion 29 of the small end portion 15 to which no large load is applied is set shorter than the axial length L1 of the lower portion 28. Therefore, the connecting rod 13 is reduced in weight while securing the rigidity of the lower portion 28 of the small end portion 15.

Besides, as shown in FIG. 5, the small end portion 15 is provided with the inclined portion 33 that is inclined such that the axial length thereof increases from the upper portion 29 side toward the lower portion 28 side. Therefore, when the oil that flows downward along the piston pin 18 reaches the inclined portion 33, part of the oil flows toward the lower portion 28 side along the inclined portion 33 as indicated by the arrows in FIG. 5. Then, when flowing along the inclined portion 33, the oil moves in the direction of extension of the central axis C of the piston pin 18 as well.

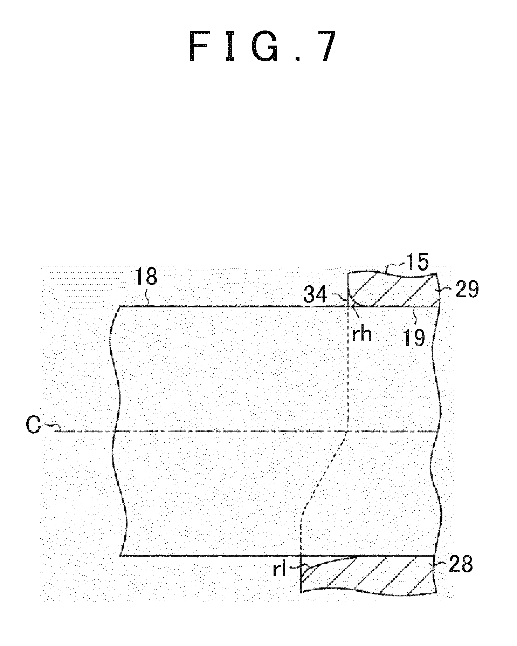

Besides, as shown in FIG. 7, the pin hole 19 is so shaped as to be increased more in diameter as the distance to the outer side in the direction of extension of the central axis C decreases at the opening edge portions 34 of the small end portion 15. Therefore, there is a large gap between the opening edge portions 34 and the piston pin 18, and the oil that falls downward along the piston pin 18 is accumulated in this gap.

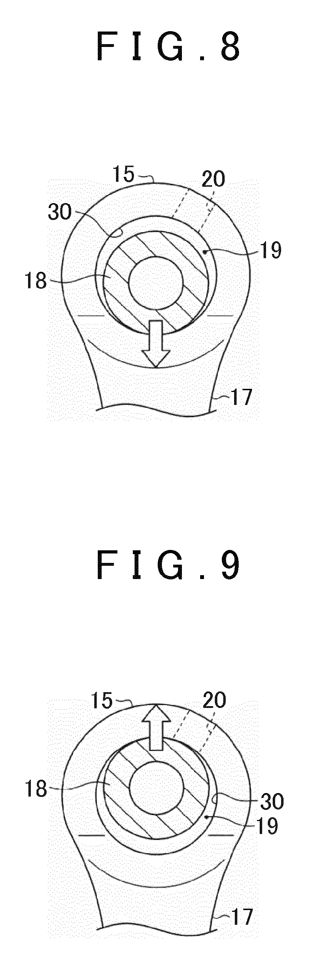

It should be noted herein that the piston pin 18 is displaced downward inside the pin hole 19 in a combustion stroke of the internal combustion engine as shown in FIG. 8. Besides, in an exhaust stroke of the internal combustion engine, the piston pin 18 is displaced upward inside the pin hole 19. In this manner, when the piston pin 18 is displaced inside the pin hole 19 as the internal combustion engine operates, a negative pressure is generated between the piston pin 18 and the inner peripheral face 30 forming the pin hole 19. That is, due to displacement of the piston pin 18 inside the pin hole 19, a negative pressure is generated in a region with an increased clearance between the piston pin 18 and the inner peripheral face 30 of the small end portion 15. Then, when the negative pressure is thus generated, the oil that is accumulated in the gap between the opening edge portions 34 and the piston pin 18 is drawn into a space between the piston pin 18 and the pin hole 19.

According to the present embodiment of the invention, as shown in FIG. 7, the opening edge portions 34 of the small end portion 15 are so curved as to move away from the central axis C in the direction of extension of the central axis C, and the pin hole 19 is so shaped as to be increased more in diameter as the distance to the outer side in the direction of extension of the central axis C decreases at the opening edge portions 34. Therefore, a large amount of oil is accumulated in the gap between the opening edge portions 34 and the piston pin 18. Therefore, a large amount of oil is also supplied to the space between the piston pin 18 and the pin hole 19 when a negative pressure is generated due to displacement of the piston pin 18.

Furthermore, as shown in FIG. 7, the pin hole 19 is increased in diameter such that the lower portion 28 moves further away from the central axis C than the upper portion 29 as the distance to the outer side of the central axis C decreases. Therefore, there is a large gap between the piston pin 18 and the opening edge portions 34 at the lower portion 28 of the small end portion 15, and the amount of the oil supplied to the lower portion 28 to which a large load is applied due to combustion increases. Incidentally, when the pin hole 19 is increased in diameter in such a manner as to move far away from the central axis C along the entire circumference thereof at the opening edge portions 34 of the small end portion 15, the area of the sliding faces of the piston pin 18 and the pin hole 19 at the upper portion 29 that is shorter in axial length than the lower portion 28 becomes too small. As a result, an increase in surface pressure is caused, and it may become impossible to secure an oil film. In contrast, according to the present embodiment of the invention, the curvature radius rl of the opening edge portions 34 at the lower portion 28 is selectively increased, and the upper portion of the pin hole 19 is more gently increased in diameter than the lower portion of the pin hole 19. Therefore, an oil film can be secured at this upper portion 29 as well.

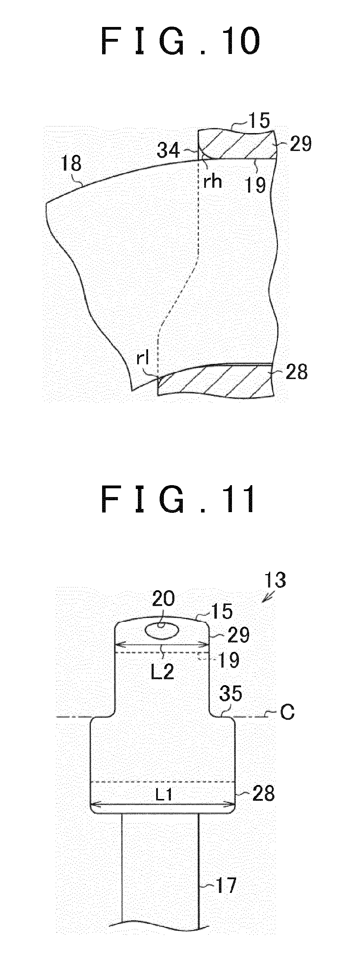

Besides, as shown in FIG. 10, the piston pin 18 is curved into an arched shape due to a load that is applied thereto as the piston 12 moves in a reciprocating manner. Incidentally, FIG. 10 shows a state where the piston pin 18 is curved in an arched shape in a combustion stroke. When curved into an arched shape in this manner, the piston pin 18 locally comes into contact with the opening edge portions 34 of the small end portion 15, and the surface pressure applied to the opening edge portions 34 increases.

In the present embodiment of the invention, as described above, the curvature radius of the opening edge portions 34 with which the curved piston pin 18 comes into contact in a combustion stroke is selectively increased at the lower portion 28. Therefore, the contact area of a region to which an especially large load is applied is secured, and the surface pressure is restrained from rising.

The following effects are obtained according to the embodiment of the invention described above.
(1) In addition to the oil that falls in drops from the reverse face of the piston 12 to adhere to the outer peripheral face of the small end portion 15 and flow into the communication hole 20, the oil that falls in drops from the reverse face of the piston 12 to adhere to the piston pin 18 and flow downward in the vertical direction along the piston pin 18 can be supplied to the sliding faces of the piston pin 18 and the pin hole 19. Accordingly, the supply of oil to the sliding faces of the piston pin 18 and the pin hole 19 can be promoted.
(2) The small end portion 15 is provided with the inclined portion 33. Therefore, part of the oil that flows downward along the piston pin 18 can also be moved in the direction of extension of the central axis C of the piston pin 18 along the inclined portion 33. As a result, oil can be supplied to wide ranges of the sliding faces of the piston pin 18 and the pin hole 19.
(3) The pin hole 19 is increased in diameter as the distance to the outer side in the direction of extension of the central axis C of the pin hole 19 decreases at the opening edge portions 34 of the small end portion 15. Therefore, a large amount of oil is accumulated in the gap between the opening edge portions 34 and the piston pin 18. When a negative pressure is generated due to displacement of the piston pin 18, the supply of oil to the sliding faces of the piston pin 18 and the pin hole 19 can be further promoted.
(4) The pin hole 19 is increased in diameter such that the lower portion 28 moves further away from the central axis C of the pin hole 19 than the upper portion 29 as the distance to the outer side of the central axis C of the pin hole 19 decreases at the opening edge portions 34 of the small end portion 15. Therefore, there is a large gap between the piston pin 18 and the opening edge portions 34 at the lower portion 28 of the small end portion 15, and the amount of the oil supplied to the lower portion 28 to which a large load is applied due to combustion can be increased. Besides, the area of the sliding faces of the piston pin 18 and the pin hole 19 at the upper portion 29 is restrained from becoming too small, and an oil film can be secured at the upper portion 29 as well. Furthermore, the contact area of the piston pin 18 and the lower portion 28 to which an especially large load is applied can be secured, and the surface pressure can be suppressed.

Incidentally, the aforementioned embodiment of the invention can be carried out after being modified as follows. In the aforementioned embodiment of the invention, the opening edge portions 34 of the small end portion 15 are curved to be formed in the shape of a curved surface. However, the opening edge portions 34 may be planar. That is, the opening edge portions may be inclined with respect to the central axis C in such a manner as to move away from the central axis C as the distance to the outer side in the direction of extension of the central axis C decreases. According to this configuration, an effect similar to the aforementioned effect (3) can be obtained. Incidentally, in this configuration, when the opening edge portions are inclined such that the lower portion 28 moves further away from the central axis C than the upper portion 29 as the distance to the outer side of the central axis C of the pin hole 19 decreases, an effect similar to the aforementioned effect (4) can also be obtained.

In the aforementioned embodiment of the invention, the curvature radius rl of the opening edge portions 34 at both the ends of the lower portion 28 of the small end portion 15 is set larger than the curvature radius rh of the opening edge portions 34 at the upper portion 29. However, the curvature radius rl of one of the opening edge portions 34 at the lower portion 28 may be set larger than the curvature radius rh of the opening edge portions 34 at the upper portion 29. Owing to this configuration as well, an effect similar to the aforementioned effect (4) can be obtained by the opening edge portion 34 whose curvature radius rl is set larger than the curvature radius rh of the opening edge portions 34 at the upper portion 29.

In the aforementioned embodiment of the invention, the pin hole 19 is increased in diameter such that the lower portion 28 moves further away from the central axis C of the pin hole 19 than the upper portion 29 as the distance to the outer side of the central axis C of the pin hole 19 decreases at the opening edge portions 34 of the small end portion 15. However, this configuration is not absolutely required to be provided. For example, the curvature radius rl of the opening edge portions 34 at the lower portion 28 may be set equal to the curvature radius rh of the opening edge portions 34 at the upper portion 29, or smaller than the curvature radius rh of the opening edge portions 34 at the upper portion 29. Owing to this configuration as well, the aforementioned effects (1) to (3) can be obtained.

In the aforementioned embodiment of the invention, the opening edge portions 34 at both the ends of the lower portion 28 of the small end portion 15 are inclined in the direction of extension of the central axis C of the pin hole 19. However, one of the opening edge portions 34 at the lower portion 28 may be inclined in the direction of extension of the central axis C of the pin hole 19. Owing to this configuration as well, an effect similar to the aforementioned effect (3) can be obtained by the inclined opening edge portion 34.

In the aforementioned embodiment of the invention, the pin hole 19 is increased more in diameter as the distance to the outer side in the direction of extension of the central axis C decreases at the opening edge portions 34 of the small end portion 15. However, this configuration is not absolutely required to be provided. That is, the opening edge portions 34 of the small end portion 15 may be parallel to the direction of extension of the central axis C of the pin hole 19 instead of being inclined with respect thereto. Owing to this configuration as well, the aforementioned effects (1) and (2) can be obtained.

In the aforementioned embodiment of the invention, the small end portion 15 is provided with the inclined portion 33, and the axial length gradually increases from the upper portion 29 side toward the lower portion 28 side. However, instead of adopting this configuration, the small end portion 15 may be changed in shape as shown in, for example, FIG. 11.

As shown in FIG. 11, the axial length L1 of the small end portion 15 at the lower portion 28 is longer than the axial length L2 of the small end portion 15 at the upper portion 29, and the upper portion 29 and the lower portion 28 are connected to each other via a step portion 35. Therefore, the small end portion 15 abruptly changes in axial length at the step portion 35. Owing to this configuration as well, the oil that falls in drops from the reverse face of the piston 12 to flow downward along the piston pin 18 can be received by the lower portion 28 to be supplied to the sliding faces of the piston pin 18 and the pin hole 19. Accordingly, owing to this configuration as well, an effect similar to the aforementioned effect (1) can be obtained.

In the aforementioned embodiment of the invention, the lower portion 28 of the small end portion 15 is the region including all the regions that are located between the central axis C of the pin hole 19 and the connection portion 32. Instead of this configuration, the lower portion 28 of the small end portion 15 may be a region including only one or some of the regions that are located between the central axis C of the pin hole 19 and the connection portion 32, as long as those regions include the lowermost portion 31 that is located below in the vertical direction when the direction of extension of the shaft portion 17 of the connecting rod 13 and the direction of motion of the piston 12 are parallel to each other. Besides, the lower portion 28 may be a region that does not include any region that is located between the central axis C of the pin hole 19 and the connection portion 32.

In the aforementioned embodiment of the invention, the in-line internal combustion engine that is mounted in the vehicle with the cylinder 11 upright in the vertical direction is described as an example. However, a configuration similar to the aforementioned configuration is also applicable to an in-line internal combustion engine that is mounted in a vehicle with the cylinder 11 inclined with respect to the vertical direction by a predetermined angle. Incidentally, in this case, when the connecting rod 13 is inclined with respect to the vertical direction by the same angle as the aforementioned predetermined angle, the direction of extension of the shaft portion 17 of the connecting rod 13 is parallel to the direction of motion of the piston 12.

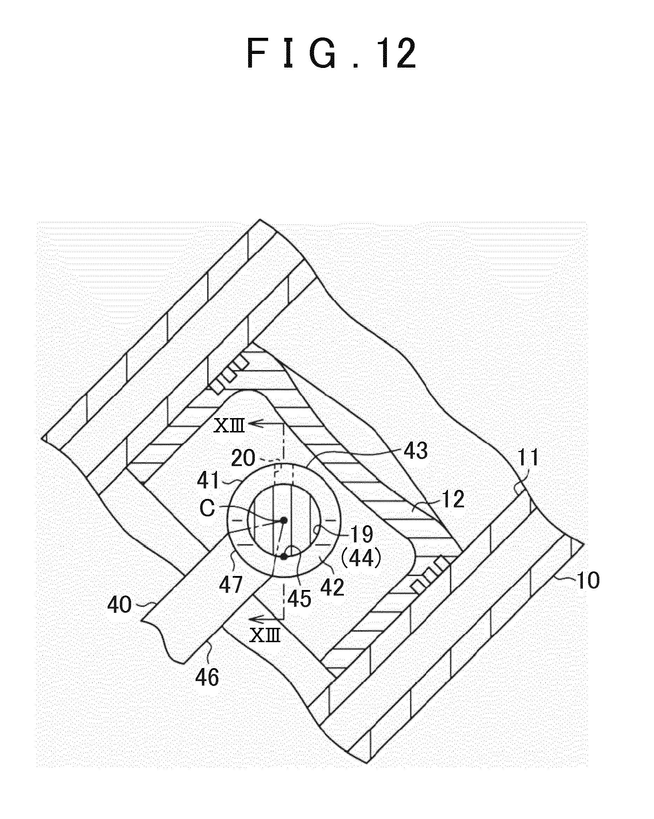

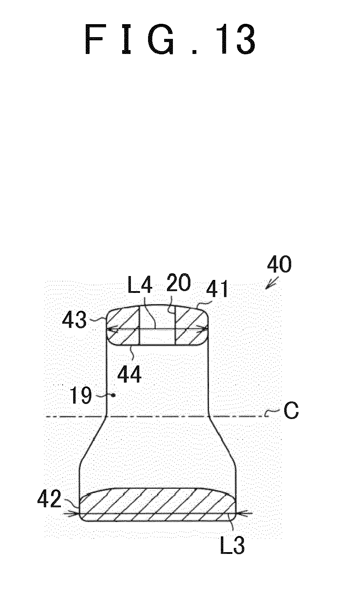

In the aforementioned embodiment of the invention, the in-line internal combustion engine in which cylinders 11 are arranged in series is cited as an example. However, a similar configuration is also applicable to an internal combustion engine in which cylinders are arranged in a V shape. In such a case, it is desirable to configure the connecting rod as shown in, for example, FIGS. 12 and 13. Incidentally, with the internal combustion engine in which the cylinders are arranged in the V shape, the configuration of the cylinders that are provided in one of banks and the configuration of the cylinders that are provided in the other bank are substantially identical to each other. Therefore, the configuration of the cylinders that are provided in one of the banks will be described hereinafter, and the description of the configuration of the cylinders that are provided in the other bank will be omitted. Besides, in the respective drawings, components identical or similar to those of the aforementioned embodiment of the invention are denoted by common reference symbols respectively, and the detailed description thereof will be omitted.

As shown in FIG. 12, the internal combustion engine in which the cylinders 11 are arranged in the V shape is mounted in the vehicle with each of the cylinders 11 inclined with respect to the vertical direction (an up-and-down direction in FIG. 12) by a predetermined angle. Incidentally, FIG. 12 shows a state where the piston 12 that is coupled to a connecting rod 40 is located at a top dead center, and the connecting rod 40 is inclined with respect to the vertical direction by the same angle as the aforementioned predetermined angle. That is, FIG. 12 shows a state where the direction of extension of a shaft portion 46 of the connecting rod 40 and the direction of motion of the piston 12 are parallel to each other.

As shown in FIG. 13, with this connecting rod 40, an axial length L3 of a lower portion 42 of a small end portion 41 that is located below in the vertical direction is longer than an axial length L4 of an upper portion 43 of the small end portion 41 that is located above in the vertical direction (L3 > L4). That is, the lower portion 42 protrudes more outward in the direction of extension of the central axis C than the upper portion 43. Incidentally, as shown in FIG. 12, in the present embodiment of the invention, the lower portion 42 of the small end portion 41 is a region including a lowermost portion 45 that belongs to an inner peripheral face 44 forming the pin hole 19 and that is located lowest in the vertical direction, and a vertically lower part of a region that is located between the central axis C of the pin hole 19 and a connection portion 47 to which the shaft portion 46 is connected. Besides, as shown in FIG. 13, the upper portion 43 of the small end portion 41 is a region that is located on the opposite side of the lower portion 42 across the central axis C, namely, a region that is located above in the vertical direction.

In the internal combustion engine in which the cylinders are arranged in the V shape as well, the oil that falls in drops from the reverse face of the piston 12 to adhere to the piston pin 18 flows downward in the vertical direction along the piston pin 18. Therefore, as is the case with the aforementioned configuration, when the axial length L3 of the lower portion 42 of the small end portion 41 that is located below in the vertical direction is set longer than the axial length L4 of the upper portion 43 in the connecting rod 40 that is assembled with the internal combustion engine in which the cylinders are arranged in the V shape, an effect similar to the aforementioned effect (1) can be obtained.

## Claims

1. An internal combustion engine comprising:
a cylinder block (10);
a piston (12) that is accommodated in a reciprocable manner in a cylinder that is provided in the cylinder block;
a piston pin (18);
a crankshaft (14); and
a connecting rod (13) including
a small end portion (15) through which a pin hole (19) is provided, the small end portion rotatably supporting the piston pin with an inner peripheral face of the small end portion and an outer peripheral face of the piston pin serving as sliding faces, the inner peripheral face defining the pin hole, and the small end portion being coupled to the piston via the piston pin,
a large end portion (16) that is coupled to the crankshaft, and
a shaft portion (17) that is connected to the small end portion and the large end portion,
the small end portion including
an upper portion (29), and
a lower portion (28) including an inner peripheral face of the pin hole, the lower portion being a region that is located below the upper portion in a vertical direction when a direction of extension of the shaft portion and a direction of motion of the piston are parallel to each other, and the lower portion protruding more outward toward a direction of a central axis of the pin hole than the upper portion.

2. The internal combustion engine according to claim 1, wherein
the small end portion includes an inclined portion (33),
the inclined portion is arranged between the upper portion and the lower portion, and
the inclined portion is inclined such that a length of the inclined portion in the direction of the central axis of the pin hole increases from the upper portion side toward the lower portion side.

3. The internal combustion engine according to claim 1 or 2, wherein
the small end portion of the connecting rod has an opening edge portion, and
a diameter of the pin hole at the opening edge portion is increased toward an outside of the pin hole along the central axis of the pin hole.

4. The internal combustion engine according to claim 3, wherein
the diameter of the pin hole at the opening edge portion is increased such that a rate of increase in a distance between the central axis and the inner peripheral face at the lower portion is higher than a rate of increase in a distance between the central axis and the inner peripheral face at the upper portion.

5. The internal combustion engine according to any one of claims 1 to 4, further comprising:
an oil jet (25) that injects oil toward a reverse face of the piston, the reverse face being a face that is located on an opposite side of a surface of the piston that defines a combustion chamber, wherein
the small end portion includes a communication hole (20) that communicates with the pin hole while facing the reverse face of the piston.
